(19) Europäisches Patentamt
European Patent Office
Office européen des brevets

(11) **EP 3 995 992 A1**

(12) **EUROPEAN PATENT APPLICATION**

(43) Date of publication:
**11.05.2022 Bulletin 2022/19**

(21) Application number: **20306343.3**

(22) Date of filing: **06.11.2020**

(51) International Patent Classification (IPC):
***G06K 9/46*** *(2006.01)*      ***G06K 9/00*** *(2022.01)*
***G06N 3/04*** *(2006.01)*

(52) Cooperative Patent Classification (CPC):
**G06V 20/41; G06N 3/0454; G06V 10/454**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOYOTA JIDOSHA KABUSHIKI KAISHA**
**Toyota-shi, Aichi-ken, 471-8571 (JP)**

(72) Inventors:
• **MINCIULLO, Luca**
**1140 BRUSSELS (BE)**

• **FRANCESCA, Gianpiero**
**1140 BRUSSELS (BE)**
• **GARATTONI, Lorenzo**
**1140 BRUSSELS (BE)**
• **DAI, Rui**
**78150 LE CHESNAY-ROCQUENCOURT (FR)**
• **DAS, Srijan**
**78150 LE CHESNAY-ROCQUENCOURT (FR)**
• **BREMOND, François**
**78150 LE CHESNAY-ROCQUENCOURT (FR)**

(74) Representative: **Cabinet Beau de Loménie**
**158, rue de l'Université**
**75340 Paris Cedex 07 (FR)**

(54) **METHOD AND SYSTEM FOR DETECTING AN ACTION IN A VIDEO CLIP**

(57) A method for detecting an action in a video clip comprising a succession of video frames (12), comprising:
- obtaining spatio-temporal features ($F_0$) extracted from the video clip;
- inputting the spatio-temporal features ($F_0$) to a first artificial neural network (20) having a first temporal receptive field;
- for i from 2 to N, N greater than or equal to 2, inputting the spatio-temporal features ($F_0$) and the output ($F_i$) of the i-1th artificial neural network to a ith artificial neural network having a ith temporal receptive field different from the i-1th temporal receptive field ;
- determining whether a given action is represented in the video clip based on the output of the N[th] artificial neural network;
wherein at least the jth artificial neural network (20), where j lies between 1 and N, comprises a self-attention mechanism.

FIG.1

**EP 3 995 992 A1**

**Description**

TECHNICAL FIELD

The present disclosure relates to action detection assisted by artificial intelligence, and more particularly to a method for detecting an action in a video clip comprising a succession of video frames.

TECHNOLOGICAL BACKGROUND

Action videos are spatio-temporal data: they are composed of images in XY space stacked along the temporal dimension T. Action detection, often known as temporal action localization, is an important computer vision problem where the task is to find precise temporal boundaries of actions occurring in an untrimmed video. Previous methods using 3D XYT convolutional filters have obtained a great success in action classification task for clipped videos. These filters learn spatio-temporal representations within a short period of time.

Learning representations for long and complex actions has proven to be more challenging. Some attempts have been proposed in the recent years to improve the modeling of long temporal relationships, but they were not sufficient for learning representations of long untrimmed videos lasting several minutes.

In daily life, human actions are continuous and can be very dense. Every minute is filled with potential labeled actions. There are three challenges while handling densely annotated datasets: when *having a meal,* sub-actions like *pouring water, drinking water, eating sandwich* and *taking pills* can happen in various combinations within a short period of time. Besides, humans are great at multi-tasking, they can *drink* while *reading books* or *take a phone call* while *putting something on the shelf.* Moreover, the temporal duration of the actions can be short or long. On the one hand, two actions that are closely related can have a large difference in temporal lengths. For example, *pole vault* can last 1 minute, while its sub-action *falling down* is only 2 seconds. On the other hand, instances of the same action class can be short or long, such as *running* that can last several minutes in a race, or a few seconds in a volleyball game.

Thus to sum up, the challenges in action detection for long untrimmed videos include (i) handling composed actions in videos, with several sub-actions that can happen in any temporal ordering, (ii) managing concurrent actions occurring at the same time, and (iii) modeling both long-term and short-term temporal duration in the video.

SUMMARY

In order to at least partially address these challenges, the present disclosure relates to a method for detecting an action in a video clip comprising a succession of video frames, comprising:

- obtaining spatio-temporal features extracted from the video clip;
- inputting the spatio-temporal features to a first artificial neural network having a first temporal receptive field;
- for i from 2 to N, N greater than or equal to 2, inputting the spatio-temporal features and the output of the i-1$^{th}$ artificial neural network to a i$^{th}$ artificial neural network having a i$^{th}$ temporal receptive field different from the i-1$^{th}$ temporal receptive field ;
- determining whether a given action is represented in the video clip based on the output of the N$^{th}$ artificial neural network;

wherein at least the j$^{th}$ artificial neural network, where j lies between 1 and N, comprises a self-attention mechanism.

The method for detecting an action in a video clip (hereinafter the "detection method") may be computer-implemented.

The spatio-temporal features are a representation of part or all of the video clip (i.e. part or all of the successive frames) that is to be processed by the artificial neural networks. As mentioned previously, the spatio-temporal features may be three dimensional data (XYT) or any representation thereof. The spatio-temporal features may be extracted from the video clip as the detection method is executed, or extracted beforehand and obtained later. This extraction may be performed, e.g. by a convolutional neural network (CNN), or any appropriate means, possibly including preliminary image treatment.

An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the learning of the ANN. In principle, learning comprises providing the ANN with a set of situations in which inputs and outputs are known. During the learning process, the ANN adapts its synaptic weights and biases to conform to the learned situations, possibly with some tolerance. The weights and biases, once determined at the end of the learning phase, may then remain constant or not during the exploitation phase. Typically, the learning process may be carried out at least prior to, and possibly simultaneously with, the implementation of the detection method.

Unless otherwise stated, hereinafter, the description of one of the ANNs may apply to other ones of the ANNs, optionally a majority of the ANNs, optionally all the ANNs, from the first ANN to the $N_{th}$ ANN. N is an integer greater than or equal to 2.

An ANN temporal receptive field is the size, in the temporal dimension, of the region in the input that can be processed by the ANN. As set out above, the successive ANNs have respective temporal receptive fields that vary from one ANN to another. The respective receptive fields may be all different from one another, i.e. for p and q between 1 and N, if p is not equal to q, the $p^{th}$ temporal receptive field is different from the $q^{th}$ temporal receptive field.

Being limited to a given receptive field, an ANN may process only part of the input features (i.e. the features given as an input) at a time. The ANN may therefore be run at a plurality of time steps of the input features, in order to globally process the whole video clip, or more generally a portion of the video clip that is longer than the receptive field.

As commonly understood in computer sciences, "for i from 2 to N" means that i takes each and every value from 2 to N. As a consequence, for all ANNs but the first one, the ANN takes as an input not only the output of the preceding ANN, but also the spatio-temporal features, e.g. as obtained from the beginning of the method. These inputs may be taken directly or indirectly, e.g. with prior processing. Due to this so-called "residual link", each ANN can access the same base features but process them differently, as will be detailed below.

As mentioned previously, at least the $j^{th}$ artificial neural network, where j lies between 1 and N, comprises a self-attention mechanism. Self-attention is known *per se,* e.g. from Vaswani, A., Shazeer, N., Parmar, N., Uszkoreit, J., Jones, L., Gomez, A.N., Kaiser, L., & Polosukhin, I. (2017). Attention is All you Need. ArXiv, abs/1706.03762. Attention mechanisms focus on the salient part of the scene relative to the target task. Typically, attention mechanisms emphasize the region-of-interest (e.g. hands, faces) corresponding to actors, which are often crucial to recognize an action. Standard temporal convolution layer (i.e. Conv1D) allocates same importance to every feature in the kernel. This property prevents the temporal convolutional kernels from effectively selecting the key information. This is a limitation especially when large temporal receptive fields are required for modeling long untrimmed videos. To overcome this, the present disclosure does not use temporal convolutional operations but attentional operations. At each time step, the $j^{th}$ ANN provides an appropriate importance for each feature in the kernel. This allows the $j^{th}$ ANN to learn better local frame representation than standard temporal convolution. To sum up, in self-attention, the inputs interact with one another to determine what they should pay more attention to, and the outputs are aggregates of these interactions and attention scores.

In the detection method, by introducing different temporal receptive fields in combination with self-attention for at least one of the ANNs (i.e. applying a self-attention mechanism for varying receptive fields to enhance the temporal modeling of actions), the method uses a novel structure of neural network. These ANNs are set with different temporal receptive fields and residual links to capture high level representations from various temporal scales. This structure increases the size of the detection receptive field. This allows the network to model short-term and long-term temporal relations simultaneously by focusing on the local representation at the level of low temporal receptive fields and their global representation at the level of high temporal receptive fields. The combination of an attention mechanism with the varying temporal receptive field structure makes the model effectively learn the dependencies between actions at different temporal levels. This enables the detection method to handle complex temporal relations between different action instances in long untrimmed videos.

Optionally, for at least one time step in the spatio-temporal features, the $j^{th}$ artificial neural network is configured to extract features from the spatio-temporal features within the $j^{th}$ temporal receptive field containing the at least one time step, to derive values and an attention mask from the extracted features, to modify the values by applying the attention mask thereto, and to output the modified values. As will be understood, in self-attention, the values and the attention mask are derived from a same vector of the extracted features, i.e. a unique set of the extracted features. Then, the values are modified by applying thereto the attention mask that was derived from the same features, hence the "self"-attention.

Optionally, the attention mask is determined from a key and a query, the key and the query being computed from input values of the $j^{th}$ artificial neural network. As mentioned before, the input values of the $j^{th}$ ANN comprise the spatio-temporal features and the output of the $j-1^{th}$ ANN; from these input values, the key and query are computed to determine the attention mask. Then, the attention mask is applied to the values that are also derived from the same input values.

Optionally, applying the attention mask comprises calculating a weighed sum of the values with attention weights.

Optionally, the $i^{th}$ temporal receptive field is defined by an $i^{th}$ dilation rate $D_i$ and the respective dilation rates $D_i$ form a monotonic sequence when i varies from 1 to N. The sequence may be increasing or decreasing, and may follow or not a particular progression such as an arithmetic progression, a geometric progression, a combination of both, etc. The dilation rate may be a scalar. Due to the monotonic sequence, the ANNs are stacked in a pyramidal structure, and the ANNs have successively greater and greater (respectively narrower and narrower) temporal receptive fields to focus on actions having a longer and longer (respectively shorter and shorter) duration.

A monotonic sequence of the dilation rates helps minimizing the number of operations that need to be performed both at training and operating time, as well as making the resulting features more interpretable, e.g. at debugging time.

Optionally, the $i^{th}$ dilation rate Di is defined by Di=$2^{(i-1)}$. Other geometric progressions are possible. In these embodiments, the temporal receptive fields increase exponentially, which gives access to action detection in video clips that are significantly longer than what could be done with prior art methods.

Optionally, the $j^{th}$ artificial neural network is a convolutional neural network. All the ANNs that comprise a self-attention mechanism may be convolutional neural networks. More generally, some or all of the ANNs may be convolutional neural networks, regardless of whether they comprise a self-attention mechanism.

Optionally, the $j^{th}$ artificial neural network is configured to perform convolution across the temporal domain of the spatio-temporal features.

Optionally, the determining whether a given action is represented in the video clip comprises predicting a score for at least one predetermined action class. The score may be a probability or calculated from a probability, e.g. a logit. The actions to detect may be gathered in at least one action class, and the score may represent the degree to which a given action belongs to an action class. The at least one action class may be predetermined, e.g. set during the training of the ANNs used in the method. The detection method may return a score for each frame and each action class, indicating the degree to which an action of said action class happens in that frame.

Optionally, N is greater than or equal to 3, and in particular, equal to 3, 4, 5, 6 or 7. The influence of the number of ANNs depends on the temporal receptive field and the average action length in the video clip. On the one hand, with more ANNs, the method can have a larger overall temporal receptive field. For instance, with N=5 and the $i^{th}$ dilation rate Di defined by Di=$2^{(i-1)}$, the method has an overall receptive field that can explore up to 63 frames (e.g. about 1 min) or more, which can satisfy the requirements of currently available datasets. On the other hand, while increasing the number of ANNs, the model captures redundant temporal information, which hampers the performance and also requires more memory.

The present disclosure is further related to a system for detecting an action in a video clip comprising a succession of video frames, comprising:

- an obtaining module configured to obtain spatio-temporal features extracted from the video clip;
- a first processing module configured to receive the spatio-temporal features as an input and comprising a first artificial neural network having a first temporal receptive field;
- for i from 2 to N, N greater than or equal to 2, a $i^{th}$ processing module configured to receive the spatio-temporal features and the output of the i-$1^{th}$ processing module as inputs and comprising a $i^{th}$ artificial neural network having a $i^{th}$ temporal receptive field different from the i-$1^{th}$ temporal receptive field ;
- a determination module configured to determine whether a given action is represented in the video clip based on the output of the $N^{th}$ processing module;

wherein at least the $j^{th}$ artificial neural network, where j lies between 1 and N, comprises a self-attention mechanism.

The system for detecting an action in a video clip (hereinafter the "detection system") may be configured to carry out the detection method according to any of the aforementioned embodiments. The detection system may have the hardware architecture of a computer.

The present disclosure is further related to a computer program including instructions for executing the steps of the above described method for detecting an action in a video clip when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method for detecting an action in a video clip. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a block diagram representing a detection system according to an embodiment;

- Fig. 2 is a diagram representing a self-attention mechanism according to an embodiment.

DETAILED DESCRIPTION OF EMBODIMENTS

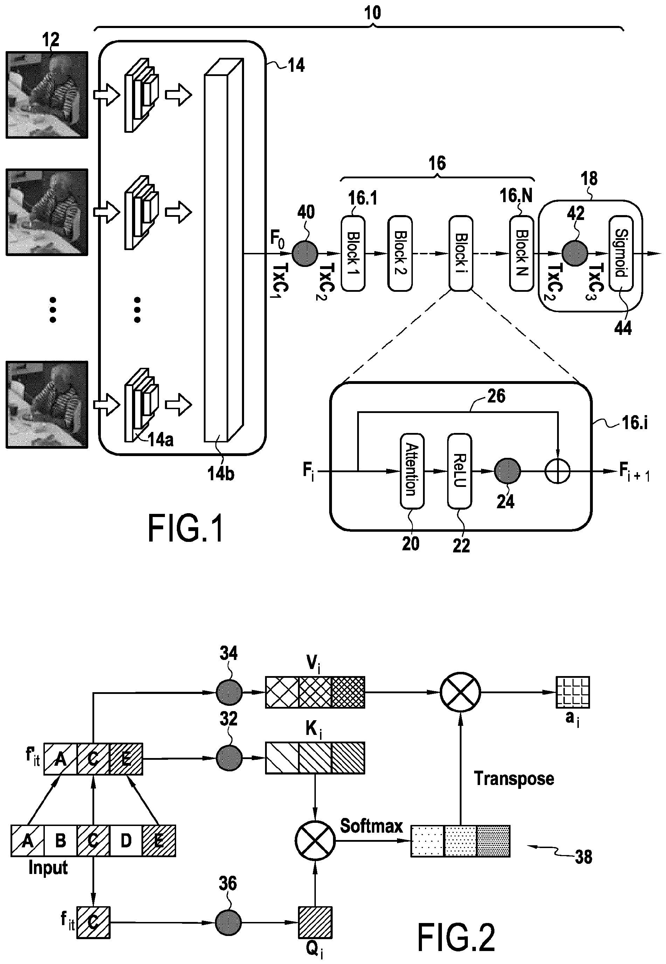

Figure 1 shows a block diagram of a detection system 10 according to an embodiment. The detection system 10 is a system for detecting an action in a video clip comprising a succession of video frames 12. The detection system 10 comprises an obtaining module 14 configured to obtain spatio-temporal features extracted from the video clip, and N processing modules 16 (or "blocks") numbered from 1 to N, N greater than or equal to 2. The detection system 10 further comprises a determination module 18 configured to determine whether a given action is represented in the video clip based on the output of the $N^{th}$ processing module. The detection system 10 may be integrated in a vehicle.

The detection system 10 may comprise an electronic circuit, a processor (shared, dedicated, or group), a combinational logic circuit, a memory that executes one or more software programs, and/or other suitable components that provide the described functionality. In other words, the detection system 10 may be a computer device. The detection system 10 may be connected to a memory, which may store data, e.g. a computer program which when executed, carries out the method according to the present disclosure. In particular, the detection system or the memory may store software which comprises one or more of the neural networks according to the present disclosure.

The detection system 10, in particular the obtaining module 14, has an input for receiving a digital video frame 12 or a stream of digital video frames 12, i.e. a video clip. In particular, the detection system 10, in particular the obtaining module 14, may be connected to an optical sensor, in particular a digital camera. The digital camera is configured such that it can record a scene, and in particular output digital data to the detection system 10, e.g. to the obtaining module 14.

The obtaining module 14 may be implemented as software running on the detection system 10 or as a hardware element of the detection system 10. The obtaining module 14 carries out a computer vision algorithm for extracting spatio-temporal features from the video clip, e.g. the presence and location of objects in a sensed scene. For example, vehicles, persons (pedestrians), and other objects may be detected.

In this embodiment, the obtaining module 14 is configured to output video segment representations (usually from frame-level or segment-level CNN features). Spatio-temporal features extracted from the RGB and Flow I3D networks 14a are used to encode appearance and motion information respectively. To achieve this, the video clip is divided into T non-overlapping segments, each segment consisting of e.g. 16 frames. The inputs to the RGB and Flow deep networks 14a, which may be 3D-convolutional neural networks, are the color images and corresponding flow frames of a segment, respectively. Then, the segment-level features are stacked along temporal axis to form a $T \times C_1$ dimensional video representation where $1 \times C_1$ is the feature shape per segment. This video representation 14b, that is the visual encoding output from the I3D networks 14a, is further input to the RGB or flow stream in the processing modules.

The RGB and the Flow stream have similar structures, the only difference is the input to the 3D CNN. Experiments show that RGB can better model the appearance information for low motion frames. When both modalities are available, a late fusion of their prediction scores may be applied, to further improve the action detection.

Furthermore, also the processing modules 16 may be implemented as software running on the detection system 10 or as hardware elements of the detection system 10. Likewise, the determination module may be implemented as software running on the detection system 10 or as a hardware element of the detection system 10. In particular, the detection system 10 may comprise a neural network which includes the obtaining module 14, the processing modules 16 and the determination module 18. Alternatively, any of these modules may be realized as an independent neural network.

The main goal of the processing modules 16 is to learn frame-level feature representation that encodes spatio-temporal information so that the model can effectively exploit information from multiple temporal scales to predict the actions for each frame. To this end, processing modules 16 are stacked so that the first processing module 16.1 receives the spatio-temporal features extracted from the video clip, from the obtaining module 14, and that each subsequent processing module 16.i (i from 2 to N) receives the spatio-temporal features and the output of the i-1$^{th}$ processing module as inputs.

As shown in Fig. 1, in this embodiment, the basic building block, or processing module, comprises a Dilated Attention Layer (DAL) 20 followed by ReLU activation 22 and a bottleneck 24 with residual connection 26. In this disclosure, bottleneck indicates the 1D convolution that processes across time and kernel size is 1. DAL 20 is an example of a j$^{th}$ artificial neural network having a j$^{th}$ temporal receptive field and comprising a self-attention mechanism, as will be detailed below (in this example, j=i). DAL 20 may be a convolutional neural network. Besides, the residual connection 26 is an example of a connection through which the spatio-temporal features extracted from the video clip can be passed on to the following block, and thus received as an input by every processing module 16.

DAL 20 allocates attentional weights to each feature in the kernel, which enables DAL 20 to learn better local representation across time. Furthermore, DAL 20, when accompanied by dilated kernels, is able to learn a global representation of several minute long videos which is crucial for the task of action detection.

More specifically, different from dilated Temporal Convolution Networks layers, DAL 20 computes adaptable probabilistic scores for each local feature of the kernel through a self-attention mechanism. Thanks to multiple DALs 20, wherein the $i^{th}$ temporal receptive field of the $i^{th}$ DAL is different from the $i-1^{th}$ temporal receptive field of the $i-1^{th}$ DAL, the detection system 10 weights local input features to capture their saliency at several temporal scales, which enables the model to capture meaningful temporal relationships between complex atomic actions. Using attention, dilation and residual connections together can capture salient segments of an action at several temporal resolutions and provide a robust representation against temporal variation of actions.

With multi-scale receptive fields, providing relevant attention weights can benefit modelling of complex temporal relationships. To this end, the respective DALs 20 of the processing modules 16 have different dilation rates, in order to inherently learn the attention weights at different temporal scales. The $i^{th}$ dilation rate Di defines the $i^{th}$ temporal receptive field. DAL 20 may process (e.g. perform convolution of) the feature maps across the temporal domain, possibly across the temporal domain only to preserve spatial information.

Figure 2 illustrates the self-attention mechanism that is applied by at least one processing module (the $j^{th}$ processing module), here by every processing module 16. As shown in Fig. 2, at time step t, the input features 30 are processed in two steps in each kernel of DAL 20. The $i^{th}$ block 16.i is taken as an example (again, in this example, j=i).

First, the elements (i.e. segment) around a center element $f_{it}$ at time $t \in [1, T]$ are extracted to form a representative vector $f_{it}'$ (a feature vector). This feature representation is based on the kernel size $ks$ ($ks$=3 in this example) and dilation rate Di at $i^{th}$ block (Di=2 in this example). Note that: feature $f_{it} \in \mathbb{R}^{1 \times C_2}, \; f_{it}{}' \in \mathbb{R}^{ks \times C_2}$.

In other words, for at least one time step t in the spatio-temporal features, the $i^{th}$ artificial neural network is configured to extract features $f_{it}'$ from the spatio-temporal features within the $i^{th}$ temporal receptive field containing the at least one time step t. As shown in Fig. 2, features A, C, E that form the features $f_{it}'$ are within the $i^{th}$ temporal receptive field (i.e. at a distance from the center element $f_{it}$=C less than or equal to Di=2), and the number of extracted features is equal to the kernel size ks (3 in this example). Features B and D are left out. However, instead of being defined as a certain distance from a center element based on the dilation rate, the receptive field could be defined differently.

Second, the self-attention mechanism is invoked by projecting the representative vector $f_{it}'$ to a memory embedding (Key: $K_i$ and Value: $V_i$) using two independent bottleneck convolutions 32, 34: $K_i(f_{it}') = W_{K_i}f_{it}'$, $V_i(f_{it}') = W_{V_i}f_{it}'$, both $W_{K_i}$ and $W_{V_i} \in \mathbb{R}^{C_2 \times C_2}$. That is, the representative vector $f_{it}'$ is projected to provide at least two different representations thereof. Then, $f_{it}$ is projected to the Query $Q_i$ using another bottleneck convolution 36: $Q_i(f_{it}) = W_{Q_i}f_{it}$ and $W_{Q_i} \in \mathbb{R}^{C_2 \times C_2}$. The output of the attentional operation for the $t^{th}$ time step is generated by a weighted sum of values $V_i$, with the attention weights obtained from the product of the query $Q_i$ and keys $K_i$:

$$a_i(f_{it}) = V_i(f_{it}{}')[softmax(Q_i(f_{it})K_i(f_{it}{}'))]^{\mathrm{T}} \qquad (1)$$

That is, the $i^{th}$ artificial neural network is configured to derive values $V_i$ and an attention mask 38, as $softmax(Q_i(f_{it})K_i(f_{it}'))$, from the input 30 (itself originating from the extracted features obtained by the obtaining module 14). In calculating $a_i(f_{it})$, the processing module 16.i modifies the values $V_i$ by applying the attention mask 38 thereto. Then, the modified values, i.e. $a_i$, is output.

In this example, the attention mask is determined from the key $K_i$ and the query $Q_i$, which are themselves computed from the input values 30. However, the attention mask may be determined in another way.

In contrast to calculating one-to-one correlation between all the elements, the attention mechanism in DAL 20 computes the correlation inside the kernel between the center element and the other local elements, which significantly reduces the number of parameters. Finally, the output of a DAL 20 is obtained by concatenating the outputs for all the time steps $t$ of the video clip.

$$attention_i(F_i) = [a_i(f_{i1})^{\mathrm{T}}, a_i(f_{i2})^{\mathrm{T}}, \ldots, a_i(f_{iT})^{\mathrm{T}}] \qquad (2)$$

where $F_i$ is the input feature map of DAL 20 at the $i^{th}$ block.

In the present embodiment, all processing modules 16 are identical to the $i^{th}$ processing module 16.i. That is, the artificial neural networks of all processing modules 16 comprise a self-attention mechanism. In other examples, only some (e.g. at least two or at least three) of the processing modules 16 have an artificial neural network comprising a self-attention mechanism. Applying self-attention on multi-temporal scale is helpful for modeling complex temporal relation. Besides, the DALs may have the same kernel size from one processing module to another. However, in other examples, the kernel sizes may differ from one another.

Each $i^{th}$ artificial neural network has a $i^{th}$ temporal receptive field different from the $i-1^{th}$ temporal receptive field. Thus, the DALs may have different dilation rates. The respective dilation rates Di may form a monotonic sequence when i varies from 1 to N. The stack of processing modules 16 therefore comprises a pyramid of DALs 20. The pyramid increases the size of the receptive field of the model. This structure allows the network to model short and long action patterns by focusing on the local segments at the level of low and high temporal receptive fields.

The $i^{th}$ dilation rate Di may increase according to a geometric sequence, e.g. Di=$2^{(i-1)}$, in order to exponentially increase the size of the receptive field of the model. Other sequences are encompassed.

As shown in Fig. 1, the input feature $F_0 \in \mathbb{R}^{T \times C_1}$ is firstly fed to a bottleneck layer 40 to lightweight the model by reducing the channel size from $C_1$ to $C_2$. Then, N blocks are stacked, each block 16.i is a cascade of a DAL 20 with ReLU activation 22, bottleneck convolution 24 and a residual link 26, as explained hereinbefore. This structure allows the receptive field to increase while keeping the same temporal length $T$ as the input. In the present example, the kernel size (ks) is set to 3 for all blocks, dilation and padding rate to $2^{i-1}$, thus the receptive field is up to $2^i + 1$ for the $i^{th}$ block 16.1. The set of operations in each block can be formulated as follow:

$$F_{i+1} = F_i + W_i * ReLU(attention_i(F_i)) \tag{3}$$

where $F_i$ indicates the input feature map of the $i^{th}$ block 16.i. In the attention layer 20 which applies the function $attention_i$, the dilation rate varies with $i$, for instance as detailed above. $W_i \in \mathbb{R}^{C_2 \times C_2}$ indicates the weights of the $i^{th}$ bottleneck 24.

Finally, the determination module 18 determines whether a given action is represented in the video clip. To this end, the determination module may compute per-frame binary classification scores for each action class (i.e. prediction logits). For instance, the $N^{th}$ block 16.N may be followed by a bottleneck convolution 42 with *sigmoid* activation 44:

$$P = sigmoid(W_{B_{N+1}} F_{N+1}) \tag{4}$$

where $P \in \mathbb{R}^{T \times C_3}$ is the prediction logits and $W_{B_{N+1}} \in \mathbb{R}^{C_3 \times C_2}$, $C_3$ corresponds to the number of action classes. Learning the parameters may be performed by optimizing the multi-label binary cross-entropy loss. Based on the above description, conventional learning techniques can be adapted by the skilled person to enable learning of the detection system 10.

Performance of the detection system 10, hereinafter called "PDAN" (for "Pyramid Dilated Attention Network") is evaluated on three challenging datasets: MultiTHUMOS, Charades and an internal InHouse dataset. All these three datasets are densely annotated with concurrent actions, allowing validating the effectiveness of PDAN in handling complex temporal relations.

MultiTHUMOS (Serena Yeung, Olga Russakovsky, Ning Jin, Mykhaylo Andriluka, Greg Mori, and Li Fei-Fei. Every moment counts: Dense detailed labeling of actions in complex videos. International Journal of Computer Vision, 126(2-4):375-389, 2018) is an improved version of Thumos dataset, which is densely annotated with 63 sport action labels. MultiTHUMOS contains various complex sport actions, such as volleyball games (*serve, block,* and *spike*), basketball games (*dribble, guard* and *shoot*), etc. MultiTHUMOS has on average 10.5 action classes per video, 1.5 labels per frame. Evaluation of the performances of MultiTHUMOS are standardly uses measuring the mean average precision (mAP) through predicting actions for each frame (frame-based mAP) of test videos.

Charades (Gunnar A. Sigurdsson, G¨ul Varol, Xiaolong Wang, Ali Farhadi, Ivan Laptev, and Abhinav Gupta. Hollywood in homes: Crowdsourcing data collection for activity understanding. In European Conference on Computer Vision (ECCV), 2016) was recorded by hundreds of people in their private homes. This dataset consists of 9848 videos across 157 actions. The actions are mainly object-based daily living actions performed at home, such as *Holding a book, Making a sandwich.* Each video contains on an average of 6.8 action classes, often with complex co-occurring actions. Hereinafter, the original Charades settings for action detection (i.e., Charades v1 localize evaluation) are followed. Similar to MultiTHUMOS, the performances are measured in terms of mAP by evaluating per-frame prediction.

InHouse dataset was recorded in a fully equipped apartment by 18 volunteers. This dataset consists of 536 long videos (about 20 mins/video) with 51 densely annotated action classes. Similar to Charades, InHouse dataset focuses on daily living actions. Differently, in this dataset, both composed actions and sub-actions are labelled. Composed actions are the ones that can be split into sub-actions. These sub-actions can be composed without any fixed order (e.g. while *having a meal,* one can *eat bread, drink juice* before or after *taking pills*). This property enables to validate whether PDAN can handle composed actions. Besides long video duration, this dataset also contains actions with high intra-class temporal variance, e.g. *writing* ranges from 3 seconds to 10 minutes. As a result, effectively handling temporal information is critical to achieve good detection performance on this dataset. Similar to MultiTHUMOS and Charades, frame-based mAP is used to evaluate this dataset.

PDAN is evaluated with the following parameters: N = 5 blocks, $C_1$ = 1024 and $C_2$ = 512 (see Fig. 1). For each DAL 20 in the aforementioned blocks, the kernel and stride size are set to 3 and 1, respectively. The dilation and padding rate are set to $2^{(i-1)}$ for block $i \in [1, N = 5]$. Adam optimizer (Diederik P. Kingma and Jimmy Ba. Adam: A method for stochastic optimization. CoRR, abs/1412.6980, 2014.) is used with an initial learning rate of 0.001, and scaled by a factor of 0.3 with a patience of 10 epochs. The network is trained on a 4-GPU machine for 300 epochs with a mini batch of 32 videos for Charades, 8 videos for MultiTHUMOS and 2 videos for InHouse dataset. Due to the available modalities within the datasets, RGB-stream only is used for InHouse dataset and two-stream structure are used for Charades and MultiTHUMOS datasets. Mean pooling of the prediction logits has been performed to fuse the RGB and Flow streams.

The proposed PDAN is compared with prior art methods from AJ Piergiovanni and Michael S. Ryoo. Temporal Gaussian mixture layer for videos. In International Conference on Machine Learning (ICML), 2019, on the MultiTHUMOS, Charades and InHouse datasets in Table 1, Table 2 and Table 3, respectively. To be noticed, the I3D baseline (i.e. I3D in the tables) used for comparison is a classifier on top of the segment-level I3D features. I3D baseline does not have further temporal processing after the video encoding part. Thus, this method cannot model long temporal information, which is crucial for action detection. The improvement over I3D baseline therefore reflects the effectiveness of modeling temporal information. PDAN consistently outperforms the prior methods for action detection on all the three challenging datasets. To be noticed that, PDAN significantly outperforms TGM + Super event that obtained the best detection performance while using the same input features (+1.2% on MultiTHUMOS, +4.2% on Charades and +9.1% on InHouse dataset). When applying 5 block structure, the detection system 10 is able to capture up to 1 min temporal information, significantly more than previous works (e.g., TGM + Super event captures about 30 seconds).

Table 1

|  | mAP |
| --- | --- |
| I3D | 29.7 |
| I3D + LSTM | 29.9 |
| I3D + temporal pyramid | 31.2 |
| I3D + 3 TGMs | 44.3 |
| I3D + 3 TGMs + Super event | 46.4 |
| I3D + **PDAN** | **47.6** |

Table 2

|  | Modality | mAP |
| --- | --- | --- |
| I3D + 3 temporal conv.layers | RGB + Flow | 17.5 |
| I3D + 3 TGMs | RGB + Flow | 21.5 |
| I3D + 3 TGMs + Super event | RGB + Flow | 22.3 |
| I3D + **PDAN** | RGB | **23.7** |
| I3D + **PDAN** | RGB + Flow | **26.5** |

Table 3

|  | mAP |
| --- | --- |
| I3D + 3 TGMs | 20.2 |
| I3D + 3 TGMs + Super event | 23.6 |
| I3D + **PDAN** | **32.7** |

This comparison with state-of-the-art methods confirms that PDAN can better handle complex temporal relations for actions from densely annotated untrimmed videos.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A method for detecting an action in a video clip comprising a succession of video frames (12), comprising:

   - obtaining spatio-temporal features ($F_0$) extracted from the video clip;
   - inputting the spatio-temporal features ($F_0$) to a first artificial neural network (20) having a first temporal receptive field;
   - for i from 2 to N, N greater than or equal to 2, inputting the spatio-temporal features ($F_0$) and the output ($F_i$) of the i-1$^{th}$ artificial neural network to a i$^{th}$ artificial neural network having a i$^{th}$ temporal receptive field different from the i-1$^{th}$ temporal receptive field ;
   - determining whether a given action is represented in the video clip based on the output of the N$^{th}$ artificial neural network;

   wherein at least the j$^{th}$ artificial neural network (20), where j lies between 1 and N, comprises a self-attention mechanism.

2. The method for detecting an action in a video clip of claim 1, wherein for at least one time step (t) in the spatio-temporal features, the j$^{th}$ artificial neural network (20) is configured to extract features ($f_{it}'$) from the spatio-temporal features within the j$^{th}$ temporal receptive field containing the at least one time step, to derive values ($V_i$) and an attention mask (38) from the extracted features ($f_{it}'$), to modify the values ($V_i$) by applying the attention mask (38) thereto, and to output the modified values ($a_i(f_{it})$).

3. The method for detecting an action in a video clip of claim 2, wherein the attention mask (38) is determined from a key ($K_i$) and a query ($Q_i$), the key ($K_i$) and the query ($Q_i$) being computed from input values of the j$^{th}$ artificial neural network (20).

4. The method for detecting an action in a video clip of claim 2 or 3, wherein applying the attention mask (38) comprises calculating a weighed sum of the values ($V_i$) with attention weights.

5. The method for detecting an action in a video clip of any one of claims 1 to 4, wherein the i$^{th}$ temporal receptive field is defined by an i$^{th}$ dilation rate Di and the respective dilation rates Di form a monotonic sequence when i varies from 1 to N.

6. The method for detecting an action in a video clip of claim 5, wherein the i$^{th}$ dilation rate Di is defined by Di=2$^{(i-1)}$.

7. The method for detecting an action in a video clip of any one of claims 1 to 6, wherein the j$^{th}$ artificial neural network (20) is a convolutional neural network.

8. The method for detecting an action in a video clip of claim 7, wherein the j$^{th}$ artificial neural network (20) is configured to perform convolution across the temporal domain of the spatio-temporal features.

9. The method for detecting an action in a video clip of any one of claims 1 to 8, wherein the determining whether a given action is represented in the video clip comprises predicting a score for at least one predetermined action class.

10. The method for detecting an action in a video clip of any one of claim 1 to 9, wherein N is equal to 3, 4, 5, 6 or 7.

11. A system (10) for detecting an action in a video clip comprising a succession of video frames (12), comprising:

   - an obtaining module (14) configured to obtain spatio-temporal features ($F_0$) extracted from the video clip;
   - a first processing module (16.1) configured to receive the spatio-temporal features ($F_0$) as an input and comprising a first artificial neural network having a first temporal receptive field;
- for i from 2 to N, N greater than or equal to 2, a $i^{th}$ processing module (16.i) configured to receive the spatio-temporal features ($F_0$) and the output ($F_i$) of the i-$1^{th}$ processing module as inputs and comprising a $i^{th}$ artificial neural network having a $i^{th}$ temporal receptive field different from the i-$1^{th}$ temporal receptive field ;
- a determination module (18) configured to determine whether a given action is represented in the video clip based on the output of the $N^{th}$ processing module;

wherein at least the $j^{th}$ artificial neural network (20), where j lies between 1 and N, comprises a self-attention mechanism.

12. A computer program including instructions for executing the steps of the method for detecting an action in a video clip of any one of claims 1 to 10 when said program is executed by a computer.

13. A recording medium readable by a computer and having recorded thereon a computer program including instructions for executing the steps of the method for detecting an action in a video clip of any one of claims 1 to 10.

FIG.1

FIG.2

Europäisches
Patentamt

European
Patent Office

Office européen
des brevets

## EUROPEAN SEARCH REPORT

Application Number

EP 20 30 6343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU BAOHAN ET AL: "Dense Dilated Network for Video Action Recognition", IEEE TRANSACTIONS ON IMAGE PROCESSING, IEE SERVICE CENTER , PISCATAWAY , NJ, US, vol. 28, no. 10, 1 October 2019 (2019-10-01), pages 4941-4953, XP011738227, ISSN: 1057-7149, DOI: 10.1109/TIP.2019.2917283 [retrieved on 2019-08-01] * abstract * * Section III.A, Section III.B, Fig. 2, Fig. 3 * | 1-13 | INV. G06K9/46 G06K9/00 G06N3/04 |
| X | COLIN LEA ET AL: "Temporal Convolutional Networks for Action Segmentation and Detection", ARXIV.ORG, CORNELL UNIVERSITY LIBRARY, 201 OLIN LIBRARY CORNELL UNIVERSITY ITHACA, NY 14853, 16 November 2016 (2016-11-16), XP080732197, DOI: 10.1109/CVPR.2017.113 * abstract * * Section III * | 1-13 | |

TECHNICAL FIELDS
SEARCHED (IPC)

G06K
G06N

-/--

The present search report has been drawn up for all claims

| Place of search | Date of completion of the search | Examiner |
|---|---|---|
| The Hague | 19 April 2021 | Androulidakis, Iosif |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
................................................................
& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 20 30 6343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAI MINGLIANG ET AL: "Optical Flow Estimation Using Dual Self-Attention Pyramid Networks", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 30, no. 10, 21 September 2019 (2019-09-21), pages 3663-3674, XP011812440, ISSN: 1051-8215, DOI: 10.1109/TCSVT.2019.2943140 [retrieved on 2020-10-01] * Section III * | 1-13 | |
| X | ZHAI MINGLIANG ET AL: "Optical flow estimation using channel attention mechanism and dilated convolutional neural networks", NEUROCOMPUTING, ELSEVIER, AMSTERDAM, NL, vol. 368, 27 August 2019 (2019-08-27), pages 124-132, XP085859009, ISSN: 0925-2312, DOI: 10.1016/J.NEUCOM.2019.08.040 [retrieved on 2019-08-27] * Section III * | 1-13 | |
| A | CN 111 563 404 A (UNIV BEIJING) 21 August 2020 (2020-08-21) * paragraphs [0086] - [0100] * | 1-13 | TECHNICAL FIELDS SEARCHED (IPC) |

The present search report has been drawn up for all claims

| Place of search | Date of completion of the search | Examiner |
|---|---|---|
| The Hague | 19 April 2021 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 995 992 A1**

## ANNEX TO THE EUROPEAN SEARCH REPORT
## ON EUROPEAN PATENT APPLICATION NO.

EP 20 30 6343

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2021

| Patent document cited in search report | Publication date | Patent family member(s) | Publication date |
|---|---|---|---|
| CN 111563404 A | 21-08-2020 | NONE | |

For more details about this annex : see Official Journal of the European Patent Office, No. 12/82

EPO FORM P0459

**14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **VASWANI, A. ; SHAZEER, N. ; PARMAR, N. ; USZKOREIT, J. ; JONES, L. ; GOMEZ, A.N. ; KAISER, L. ; POLOSUKHIN, I.** *Attention is All you Need,* 2017
- **SERENA YEUNG ; OLGA RUSSAKOVSKY ; NING JIN ; MYKHAYLO ANDRILUKA ; GREG MORI ; LI FEI-FEI.** Every moment counts: Dense detailed labeling of actions in complex videos. *International Journal of Computer Vision,* 2018, vol. 126 (2-4), 375-389
- **GUNNAR A. SIGURDSSON ; G¨UL VAROL ; XIAOLONG WANG ; ALI FARHADI ; IVAN LAPTEV ; ABHINAV GUPTA.** Hollywood in homes: Crowdsourcing data collection for activity understanding. *In European Conference on Computer Vision (ECCV),* 2016
- **DIEDERIK P. KINGMA ; JIMMY BA. ADAM.** A method for stochastic optimization. *CoRR,* 2014
- **AJ PIERGIOVANNI ; MICHAEL S. RYOO.** Temporal Gaussian mixture layer for videos. *In International Conference on Machine Learning (ICML),* 2019